(19) **Europäisches Patentamt European Patent Office Office européen des brevets**

(11) **EP 1 760 490 A1**

(12) # EUROPEAN PATENT APPLICATION

(43) Date of publication:
**07.03.2007 Bulletin 2007/10**

(51) Int Cl.:
*G01S 11/14* (2006.01)     *G01S 5/18* (2006.01)

(21) Application number: **06123345.8**

(22) Date of filing: **16.04.2004**

(84) Designated Contracting States:
**AT BE BG CH CY CZ DE DK EE ES FI FR GB GR HU IE IT LI LU MC NL PL PT RO SE SI SK TR**

(30) Priority: **22.04.2003 EP 03101098**

(62) Document number(s) of the earlier application(s) in accordance with Art. 76 EPC:
**04727964.1 / 1 620 748**

(71) Applicant: **Koninklijke Philips Electronics N.V.**
**5621 BA Eindhoven (NL)**

(72) Inventors:
• **Van Loenen, Evert, J.**
**5600 AE, Eindhoven (NL)**

• **Dijk, Esko, O.**
**5600 AE Eindhoven (NL)**
• **Van Berkel, Cornelis, H.**
**5600 AE, Eindhoven (NL)**

(74) Representative: **Groenendaal, Antonius W. M.**
**Philips**
**Intellectual Property & Standards**
**P.O. Box 220**
**5600 AE Eindhoven (NL)**

Remarks:
This application was filed on 02 - 11 - 2005 as a divisional application to the application mentioned under INID code 62.

(54) **Object position estimation system, apparatus and method**

(57) The position estimation system (220, 226, 222) for estimating a position of an object (224) in a room (200) works by an ultrasound emitter (220) emitting an ultrasound pulse (201), which is reflected at least once on a reflecting object (232), after which an ultrasound receiver (226) detects an ultrasound signal (300) comprising at least the reflection and possibly also a line of sight transmission. Either the emitter or the receiver is attached to the object. A processor estimates the position of the object (224) on the basis of the ultrasound signal (300), by a calculation dependent on properties of the ultrasound signal (300) or by matching the ultrasound signal (300) with templates for object (224) positions, obtained by measurement or by simulation of the ultrasound pulse (201) transmission in the room (200).

FIG.2

EP 1 760 490 A1

**Description**

The invention relates to a position estimation system for estimating a position of an object in a room, comprising:

- an ultrasound emitter arranged to emit an ultrasound pulse;
- an ultrasound receiver arranged to detect an ultrasound signal based on the pulse; and
- a processor for processing the ultrasound signal to obtain the position.

The invention also relates to an apparatus for estimating a position of an object in a room comprising:

- an ultrasound receiver arranged to detect an ultrasound signal based on an emitted ultrasound pulse; and
- a processor for processing the ultrasound signal to obtain the position.

The invention also relates to a method of estimating a position of an object in a room, comprising:

- emitting an ultrasound pulse;
- detecting an ultrasound signal based on the pulse; and
- processing the ultrasound signal to obtain the position.

The invention also relates to a computer program product enabling a processor to execute such a method.

In prior art such position estimation systems are typically realized as triangulation systems, such as the variant of US-5,107,746. The known system variant comprises for estimating the position of an object in a plane at least three ultrasound emitters and an ultrasound receiver connected to the object. The system calculates the time it takes an ultrasound pulse emitted by each one of the emitters to travel to the receiver. If the three emitters are not collinear, the position of the object can be derived by means of the laws of geometry. More emitters may be present in a triangulation system for increased accuracy. Position is understood to be three-dimensional position (x,y,z) e.g. in a coordinate system relative to a corner of the room, although in some systems only some of the coordinates may be measured.

It is a disadvantage of the known system variant that the possibilities of ultrasound position estimation are not exploited fully.

It is a first object of the invention to provide a system of the kind mentioned in the opening paragraph, which is, constructed to better exploit the possibilities of ultrasound object position estimation.

This first object is realized in that either the emitter or the receiver is attached to the object and the processor comprises evaluation means arranged to estimate the position of the object on the basis of the ultrasound signal in a first time interval, the first time interval comprising ultrasound energy of at least a first reflection of the pulse traveling towards a reflecting object on the reflecting object. Apart from the direct line of sight (LOS) transmission of the ultrasound pulse from the emitter to the receiver, in a room the pulse also reflects off objects, such as e.g. walls. The invention is based on an insight that a signature of these reflections can be used to estimate the location of the object. E.g. if an object is nearby a cupboard, the detected ultrasound signal may comprise a strong first peak corresponding to the direct transmission, a weak first reflection peak corresponding to a reflection off a wall towards the object and a relatively strong second reflection peak, corresponding to a reflection off the cupboard towards the object. If the same object is positioned in the middle of the room, the second reflection peak may firstly not be present or at least not so pronounced, and secondly it will arrive at a different time corresponding to the direct transmission peak. Hence the signature of peaks is characteristic of the object's position. The sound field in the room is as it were sampled at the position of the object. The first time interval is predetermined as to contain at least one peak corresponding to a reflection off an object. The temporal location of this peak may already be enough, in case e.g. a one-dimensional position along a narrow long table is to be determined via reflection of a ceiling of the room. In general more information can be retrieved from the location, height, etc. of any of the peaks, so the interval will typically be as large as to contain all meaningful reflections, while rejecting the reverberation tail, which will only confuse. Optimal values for this interval, determined e.g. from tests in rooms of different sizes and contents, may be prestored in the processor. The fact that reflections are used instead of or in addition to the direct transmission peak has a number of advantages. Firstly, instead of needing at least three, or for three-dimensional position estimation four emitters, a single emitter conveniently placed in the room is sufficient, since the different object positions have different corresponding ultrasound signal signatures. Because the system may be simple, more applications become feasible, for which classical systems would be too expensive. Secondly, triangulation needs clock synchronization, whereas some variants of the system according to the invention can work without a clock. Thirdly, the system is more robust in that it can tackle more easily the complex and possibly varying, in case the object of which the position is to be estimated is moving or being moved, configurations of objects in the room. There may be no direct line of sight for some object positions, since looking towards the object from the emitter when fixed in the room, the object may be behind another object. This is relevant for some applications. E.g. in an application to find a misplaced object, the misplaced object may typically be placed e.g. on a bookshelf, in which case most of its sides are blocked by the sides of the shelf. However, even through a small crevice there will be ultrasound passing. An object may even be placed inside a cupboard, i.e. with the door closed, and the system may still work provided there is some ultrasound penetrating the cupboard. A related advantage is that the emitter, or receiver, may be hidden from direct sight, e.g. behind a panel or in the ceiling.

The emitter may be in a fixed position in the room and the receiver attached to the object. Vice versa, the system works in exactly the same way if the emitter is attached to the object and the receiver fixed in the room. This last option is very desirable for relatively cheap objects. Since a cheap object typically may not comprise the necessary processing capability to perform the position estimation, it may have to transmit the ultrasound signal detected to a processor in the room, e.g. by means of a bluetooth or other RF, IR etc. connection. However if the emitter is attached to the object, it may be comprised in a very simple configuration, e.g. a circuit incorporated in a label similar to what is known from theft protection or an attached ASIC, which emits an ultrasound pulse e.g. every 10 seconds. The receiver may then be comprised together with the processor in a module, which is put somewhere in the room by a user. Of course, both emitters and receivers may be attached to the object resp. fixed in the room, and as is known to a person skilled in the art of ultrasound transducers a transducer may function both as an emitter and a receiver.

There are also prior art object position estimation systems which position objects by ultrasound reflecting off the object into a receiver typically close to the emitter. These systems would not work very well in some of the applications for which the system according to the invention is intended, e.g. small objects can each be fitted with a label containing an emitter and hence reveal their position, but there would not be enough ultrasound reflected off them. And also in many systems with an isotropically emitting emitter or wide-angle emitter, you would not know if the returning signal had reflected off the desired object or another object. Under pulse should be understood any of a variety of emitted signals, including e.g. a signal of short temporal duration. It is advantageous if the pulse signal has a sharp declining autocorrelation, as e.g. a Barker sequence or a noise signal. The working of the system according to the invention is described with a Dirac pulse or equivalently a very short duration emitted ultrasound signal.

An embodiment of the position estimation system comprises a storage means, arranged to store a first ultrasound signal template corresponding to a first position of the object and a second ultrasound signal template to a second position of the object, and the evaluation means are arranged to compute a first match by evaluating a predetermined match function with as arguments the ultrasound signal in the first time interval and the first template in a first template interval, and a second match by evaluating the predetermined match function with as arguments the ultrasound signal in the first time interval and the second template in a second template interval. For each position where the object may be put, e.g. on the coffee table, in the couch, on a cupboard, etc., there may be at least one template present in the storage means. Evaluation means are present, e.g. in the processor, to compare the ultrasound signal detected by the receiver with each of the different templates. Therefore a predetermined match function is evaluated, e.g. a correlation. Under match function should also be understood functions that are sometimes called error functions, like e.g. a mean squared error criterion, or in general any function that is capable of indicating a similarity between the detected ultrasound signal and the templates. The best matching template corresponds to the most likely position of the object. For increased robustness, several match functions can be evaluated, and their results can be combined in any way known in mathematics.

A further variant of the embodiment comprises collecting means, arranged to collect the first ultrasound signal template and the second ultrasound signal template on the basis of ultrasound signal measurements by the receiver, with the object positioned at a position in the room corresponding to the first resp. the second position. E.g., the receiver may be attached to the object, in which case it detects the local ultrasound field based on a pulse from one or more emitters typically fixed in the room, or an emitter attached to the object may also be used, in which case typically one or more receivers at fixed locations in the room detect an ultrasound field characteristic for a pulse emission from the particular position of the object in the room. The user may then position the object in a number of interesting positions, e.g. on the couch, and train the system by activating it. The object may e.g. comprise a microphone, which picks up the sound of a user's speech saying "couch", and this speech may be stored by a second processor comprised in the object in a memory in the object. In an application to find a lost object, the speech saved for a particular estimated object position may then be reproduced with a loudspeaker attached to the object. No speech recognition is needed in this object embodiment, only a table in the memory linking uttered speech sentences and ultrasound signal characteristics. Alternatively, the user may e.g. enter position information, in a predetermined way, e.g. by means of user interface software, receiving as input room coordinates, or object names, etc., by means of a computer or other consumer apparatus, like a mobile phone, remote control, etc.

Another variant of the embodiment comprises simulation means, arranged to generate the first position and the second position of the object and calculate the first ultrasound signal template and the second ultrasound signal template on the basis of the pulse, predetermined characteristics of the room, and the first resp. the second hypothetical position. An ultrasound signal signature may also be calculated by simulation means instead of being measured. This saves the user the work of putting the object in different positions and training the system. Furthermore, positions may be estimated which were never trained. For this, the simulation means simulates how the pulse moves through the room and reflects off all objects. Predetermined characteristics of the room are needed. For simple configurations, these characteristics need not comprise much information. In an advantageous system configuration e.g., the emitter, or receiver, is positioned close to the ground and object positions are estimated by means of reflections off the ceiling. This largely avoids complicated reflections on the many objects that may be present in the room. Alternatively, a full simulation of all reflections may be performed by the simulation means. Therefore room characterizing means may be present to retrieve the room characteristics, e.g. a scanning ray may go through all angles in the room. Different simulation models may be used, e.g. ray tracing, or the image method. All simulated templates are subsequently stored in the storage means, e.g. chip memory or a removable disk, and during use of the system, a detected ultrasound signal is compared with all the stored templates as described above.

Another embodiment comprises optimization means, arranged to predict a predicted position of the object and evaluate a third ultrasound signal template on the basis of the pulse, predetermined characteristics of the room and the predicted position. Instead of prestoring templates, these templates may also be calculated by simulation on the fly. This may lead a faster system if the time to simulate a few templates, e.g. with a simple simulation system, is shorter than the time to compare all templates in the storage means. There may already be a good initial guess of the object position. The exact position may then be derived in a number of prediction steps, with any of the methods known form optimization theory, e.g. steepest descent. A manifold may be modeled in an N dimensional space having on its axes parameter values extracted from the signature, e.g. the positions and amplitudes of different peaks. The correct position may also be calculated directly, e.g. on the basis of the locations of the peaks of the reflections.

An advantageous variant of the embodiment is arranged to have the storage means contain more than one ultrasound signal template for a hypothetical position of the object, and the processor is arranged to estimate besides the position of the object a further parameter. E.g. if an object is lying on the table, the signature of its detected ultrasound signal may be different when a door is opened or closed. The further parameter being the extent to which the door is opened may or may not be actually used in an application of the system, but at least the estimation of the position is less error prone because the detected ultrasound signal is not yielding a better match with a template of an incorrect position. This may also be a variant of the system according to the invention itself, e.g. in the embodiment with the optimization means, and without storage means, for each predicted position a number of simulations may be performed with different parameters, e.g. room configurations.

In a further variant of the variant directly above, the processor is arranged to estimate as the further parameter an orientation of the object. If the object has a single receiver, ultrasound signals with different signatures may be detected depending on the orientation of the object. E.g., if the receiver is pointed towards the reflections of the cupboard, i.e. its angular sensitivity function is greatest in the direction of the cupboard reflection, a strong peak will be detected, but if the receiver is pointing towards another direction it will not be as pronounced. By identifying a template corresponding to a certain object orientation as best matching template, the object knows in what direction it is pointing. If the object is a remote control e.g., it may send another command depending on whether it is pointing to e.g. a television or a stereo set. Orientation is understood as three angles in space, e.g. represented as pitch-roll-yaw (p, r, a). For an object like a remote control lying on a table only the estimation of the yaw a may be required.

In a multireceiver variant, the receiver or the emitter is attached to the object, and a second receiver respectively a second object emitter is attached to the object, and the processor is arranged to estimate the position of the object based on the ultrasound signal detectable by the receiver and a second ultrasound signal detectable by the second receiver, respectively based on the ultrasound signal detectable on the basis of the pulse emitted by the emitter and the second ultrasound signal detectable on the basis of a second pulse emitted by the second object emitter. E.g. if the object is a rectangular hexahedron, a receiver may be attached to each of the five surfaces not in contact with the ground, by combining the matches of ultrasound signals received from the different directions, a relatively robust position estimation may be achieved.

Similarly another multireceiver variant may easily estimate the orientation of the object. A single receiver, if non isotropic, may also estimate the orientation, but by analyzing the signals impinging on the object from different orientations this can be done more robustly or more accurately.

In a beam-scanning variant, a plurality of emitters or receivers is comprised, arranged in at least one array, to create a number of pulses of different shapes and orientations respectively receive pulses impinging on the receivers from different orientations and in different solid angles. Techniques known in the state of the art of beamforming can be used to e.g. make an array of emitters on the object, which is capable of emitting a beam of narrow width in a predetermined direction. Different directions can be scanned through by changing phases of the signals to the different emitters. Similarly, an array of receivers on the object can be more sensitive to ultrasound signals approaching from particular directions. Beamforming is well known, but the application in the system according to the invention is based on the insight that more information can be obtained by using reflections arriving from an object under different angles. Furthermore, those directional reflections may be more characteristic, and only the most characteristic ones may be selected for matching, discarding the less characteristic ones, according to a predetermined characterizing power identification criterion, comprising e.g. the number of significant peaks, the inter peak amplitude variation etc.

In an object-identifying variant, the emitter is attached to the object, and is arranged to emit the pulse comprising frequencies in at least one predetermined frequency band characteristic for the object. A first object may e.g. identify itself by emitting frequencies in a narrow band, e.g. several hertz up to several kHz, around 40 kHz, while a second object emits frequencies around 45kHz. In this way, not only the position of the object is readily identified, but with minor modifications also the identity of the object is identified. Multifrequencyband codes may also be used, as well as other coding schemes, which use temporal, frequency, phase, etc. information.

In a tracking variant, tracking means are comprised, arranged to track along a trajectory the position of the object.

A system capable of tracking moving objects may have object guidance means to guide the object, e.g. a vacuum cleaner capable of automatically cleaning the room or a robot. The fact that the locations of all the other objects may be known, e.g. receivers on the four corners of a cupboard, is advantageous for guiding the vacuum cleaner around the objects, and contrary to the random cleaning strategy assuring that every square cm of the floor is cleaned. Furthermore, since a moving object has ultrasound signatures of different locations, a higher localization accuracy and/or robustness may be achieved. E.g. the processor may be arranged to combine a number of templates in the vicinity of a position, or the tracking means may be arranged to derive the current object position taking into account any combination of information on the trajectory, e.g. a likeliness of a trajectory, or signatures detected along the trajectory. E.g. by detecting a signature corresponding to a position in the vicinity of a table and at a later time instance a signature corresponding to a position in the vicinity of a cupboard, the processor is able to identify to which part of the room an object is moving, and in which part it can not reside.

An apparatus for estimating a position of an object in a room comprising:

- an ultrasound receiver arranged to detect an ultrasound signal based on an emitted ultrasound pulse; and
- a processor for processing the ultrasound signal to obtain the position, characterized in that the processor comprises evaluation means arranged to estimate the position of the object on the basis of the ultrasound signal in a first time interval, the first time interval comprising ultrasound energy of at least a first reflection of the pulse on a reflecting object is also disclosed.

It is a second object of the invention to provide a method of the kind mentioned in the opening paragraph, which is, constructed to better exploit the possibilities of ultrasound object position estimation.

The second object is realized in that:

- the pulse is emitted from a position in a vicinity of the object or the ultrasound signal is detected in the vicinity of the object; and
- the processing comprises an evaluation of the ultrasound signal in a first time interval comprising ultrasound energy of at least a first reflection on a reflecting object. This method i.e. its steps or actions may form part of different applications such as e.g. tracking an object along a production line or guiding a robot through a building.

A computer program product enabling a processor to execute the method is also disclosed.

These and other aspects of the position estimating system and apparatus according to the invention will be apparent from and elucidated with reference to the implementations and embodiments described hereinafter, and with reference to the accompanying drawings, which serve merely as non-limiting illustrations.

In the drawings :

Fig. 1a and 1b schematically show triangulation examples of prior art;
Fig. 2 schematically shows a room with the position estimation system;
Fig. 3a schematically shows an ultrasound signal as detected by the receiver;
Figs. 3b and 3c schematically shows two ultrasound signal templates;
Fig. 4 schematically shows a simple configuration of the system for estimating a one-dimensional object position;
Fig. 5 shows another configuration of the system with two fixed receivers; and
Fig. 6 shows a multireceiver system capable of beamforming.

In these Figs. elements drawn dashed are optional, depending on the desired embodiment.

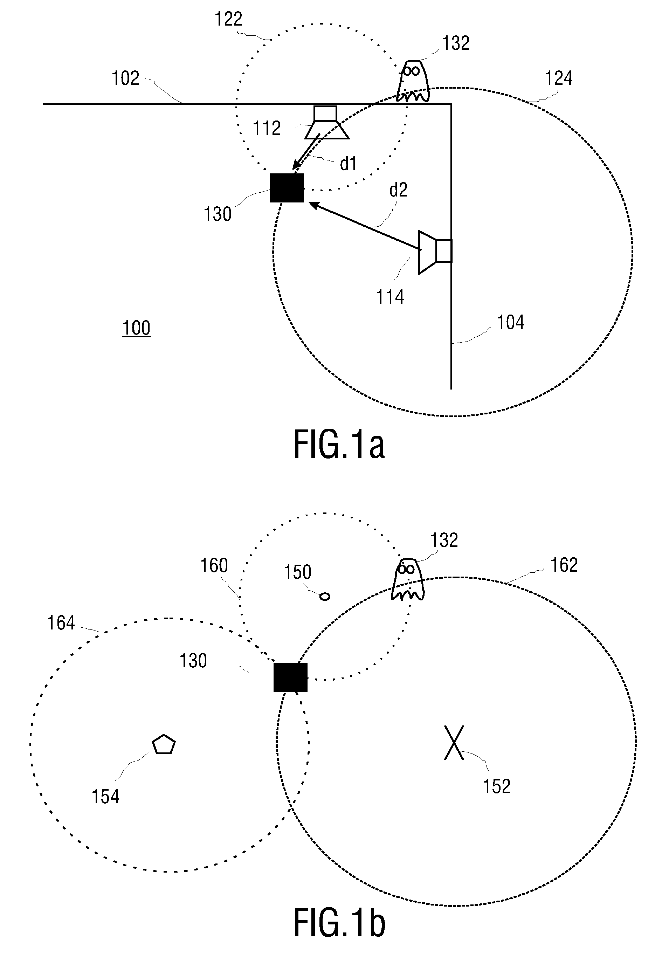

In Fig. 1a a first triangulation emitter 112 and a second triangulation emitter 114 emit a first resp. second pulse ultrasound signal of short temporal duration, which travels isotropically as a circular wave front through a room 100. At a time t1 corresponding to a distance d1, the first pulse is detected by an ultrasound receiver attached to an object 130 and at t2 corresponding to a distance d2 the second pulse is detected. With these distances, circles can be drawn with as origins the known positions of the emitters and through geometrical calculation the position of the object can be calculated, since the other intersection of the circles is outside the room 100. In general however, three emitters are needed in order not to confuse the true position of the object 130 with a ghost position 132 as is shown in Fig. 1b. In practice even more, e.g. 4, emitters are used to increase the accuracy, since each circle intersection point is in fact an error interval. Also for three dimensional rather than two-dimensional position estimation at least a fourth emitter is in general necessary. This is because the three emitters are always lying in a plane and the true position of the object 130 can not be discerned form its ghost, mirrored with respect to the plane. However, by intelligently positioning the sensor and using constraints of the room such as the floor or the ceiling three emitters may be enough for three-dimensional positioning. After concluding this short summary of triangulation according to prior art, the remainder of the text elucidates aspects of the position estimation system according to the invention.

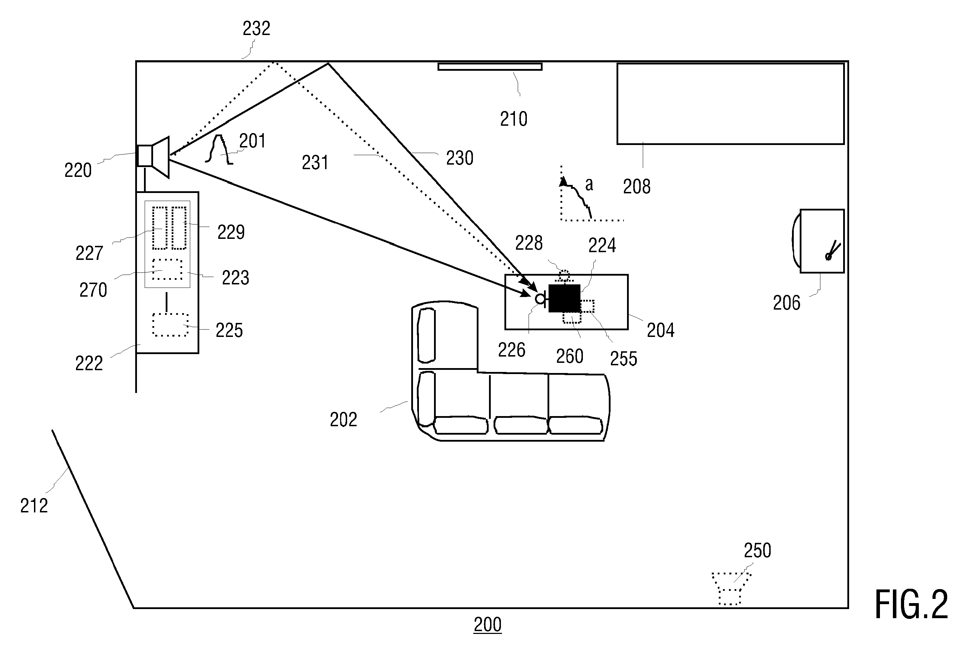

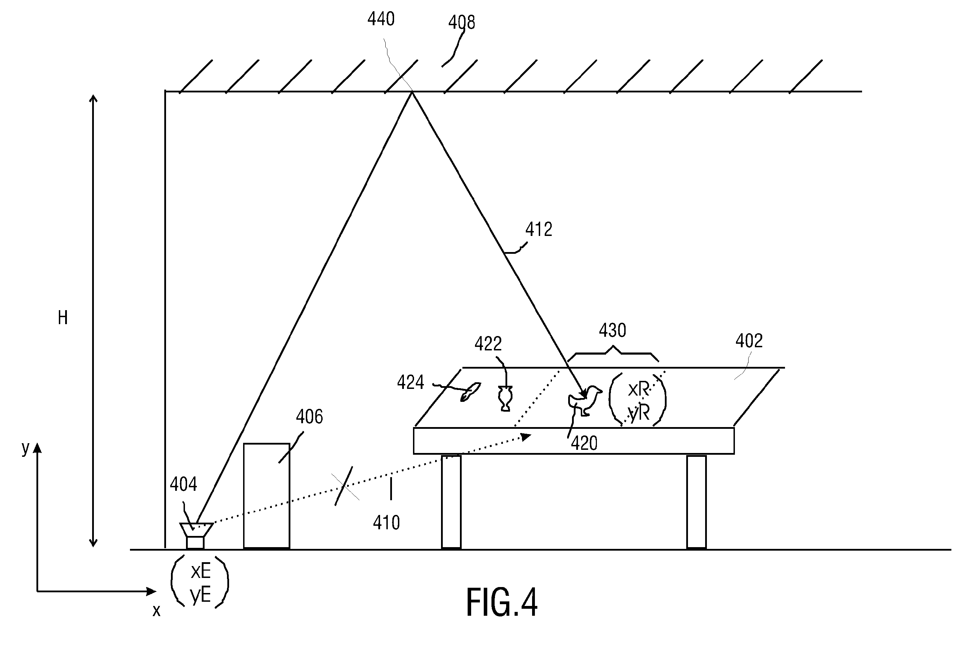

In Fig. 2 the position estimation system is schematically shown in a room 200. It is emphasized that also the term "room" should be understood in a broad sense. E.g. a single wall in a garden may be enough to introduce the necessary reflections for the system to work in a way similar to the position estimation explained with Fig. 4. The garden is then to be understood as a room, and the object may be e.g. a guided lawn mower. In a supermarket e.g. the system according to the invention may be used to see if all products of a particular type are in the shelves or still in boxes. A robot may automatically fill the shelves, on the basis of position information of a previously stowed away object. In a factory the system may be used to track objects along the production line, etc. In fact the room may be any (partially) closed enclosure large enough to incorporate the system.

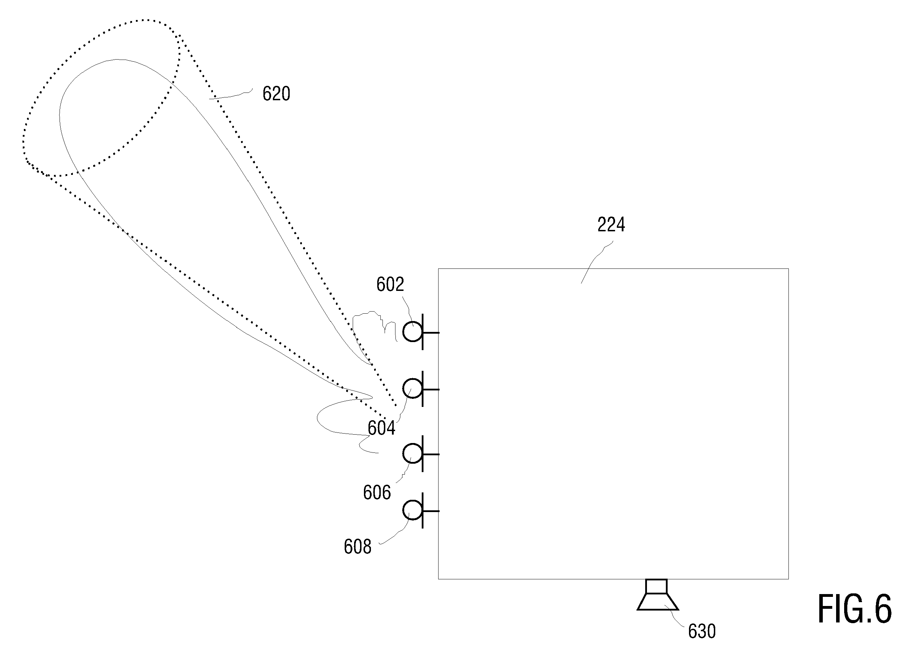

The position estimation system 220, 226, 222 is arranged to estimate a position of an object 224 in a room 200 by comprising an ultrasound emitter 220 arranged to emit an ultrasound pulse 201. If the emitter is isotropic, the same pulse shape travels to all directions in the room. The emitter may also be non isotropic, in which case a stronger pulse is emitted in some directions, and it may be so constructed that no pulse is emitted in other directions. By using the interference of pulses emitted by an array of emitters, a strongly directional pulse can be created, the direction of which can be controlled, i.e. different directions can be scanned. A similar system containing an array of microphones 602, 604, 606 and 608 is shown in Fig. 6, in which with beam former technology, well known from e.g. the book "S. Haykin: Adaptive filter theory. Prentice Hall 2001. ISBN 0130901261.", is used to make the array more sensitive to signals arriving within a solid angle 620.

Advantageous positions for the emitter 220 may be the floor for off ceiling reflections or the ceiling for off floor, and off wall, reflections, in which case there are typically less high amplitude reflections off other objects. This may be less advantageous for supplying characteristic signatures but more advantageous for obtaining position estimates on the basis of the time of arrival of peaks corresponding to reflections, since these reflections will be more easily identified. Also the probability of LOS transmission is higher for an emitter/receiver on the ceiling. A fixed second emitter 250 and further emitters may be present for enhanced accuracy. Such a fixed emitter 250 should not be confused with a second object emitter 630 attached to the object 224. In the former case a receiver 228 on the object 224 is in the same position and orientation and samples as it were two different sound fields corresponding to exciting the room 200 with ultrasound from different directions. The ultrasound signal detected based on either sound field is enough for position estimation, however in case the signatures of some object 224 positions are so similar that confusion and hence erroneous position estimation may occur, a second sound field may resolve this issue. However the receiver 228 attached to the object 224 samples both sound fields at the same position and from the same direction. Attaching multiple emitters to the object 224, enables estimating the position of different parts of the object, and/or sending pulses through the room 200 in different directions, e.g. to ensure that there is at least one LOS transmission.

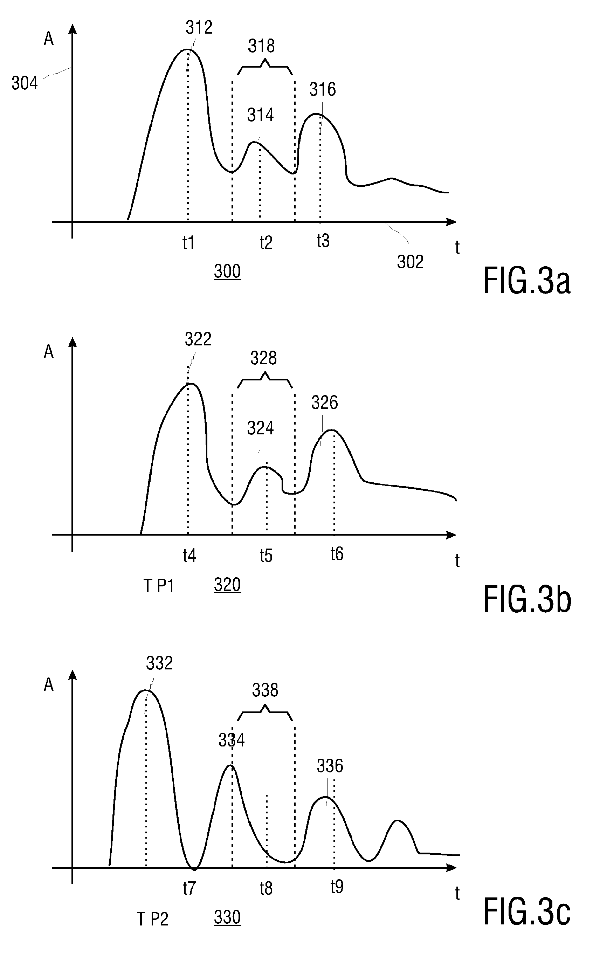

The pulse reflects off an object 232, such as e.g. a wall or a ceiling, as a first reflection 230 and travels towards an ultrasound receiver 226 arranged to detect an ultrasound signal 300. In Fig. 3a this introduces a second peak 314 at time instance t2. There may be further reflections e.g. off a cupboard 208 and then to the receiver 226 or first off the wall, then off the cupboard 208 and then to the receiver 226. This is symbolized by the third peak 316 arriving at the receiver 226 at time instance t3 in Fig. 3a. The first reflection may be the reflection of an isotropically emitted pulse 201 in which case it actually contains elementary rays from different directions. Alternatively if the pulse is emitted in a particular direction or the receiver scans from a particular direction, there will only be rays detected corresponding to that particular direction, and a further reflection 231, for a non-specular reflecting surface, may be detected at another instance of time by emitting to or receiving from another direction by means of emitter resp. receiver array technology or the two in a linked scanning.

A processor 222 is also present, which comprises an evaluation means 223 arranged to estimate the position of the object 224 on the basis of a first time interval 320 of the ultrasound signal, the first time interval 318 comprising ultrasound energy of at least a first reflection 230 on a reflecting object. There are different algorithms possible to estimate the object position.

A first one is direct calculation. This is illustrated with Fig. 4, in which the location of various objects, e.g. a duck 420, a pen 424 and a vase 422 on a long, narrow table 402, so that the objects are roughly positioned in a one-dimensional space, is to be estimated by means of a ceiling reflection, more particularly it has to be decided whether an object is within a central portion 430 of the table 402. Suppose an emitter 404, or vice versa this could be a receiver if emitters are attached to the objects, is hidden behind an object 406, so that there is no direct line of sight (LOS) transmission 410. A first ceiling refection 412 arrives at the duck 420 after a time delay Δt equaling:

$$\Delta t = \frac{1}{c}\left(\sqrt{(H - y_E)^2 + \left(\frac{(H - y_E)(x_R - x_E)}{(2H - y_E - y_R)}\right)^2} + \sqrt{(H - y_r)^2 + \left(x_R - x_E - \frac{(H - y_E)(x_R - x_E)}{(2H - y_E - y_R)}\right)^2}\right)$$

in which c is the speed of sound, xE and yE are the known position coordinates of the emitter, and xR and yR the position to be estimated of the object 224, in this case the duck 420.

This formula can be simplified to:

$$\Delta t = \frac{1}{c}\sqrt{(x_R - x_E)^2 + (y_R - 2H + y_E)^2}$$

The only parameters to be known of the room in this algorithm is the height H of the room 200, and the height yR of the table. Furthermore also the position of the emitter (xE, yE) is known. In this variant of the system a synchronized clock for both the emitter and the receiver is required. However, in case the direct line of sight transmission 410 is present, it may be used to solve the problem of the unknown time of emitting the pulse 201. By using the ceiling reflection, this system may be conceived as a two-emitter system as in Fig. 1a, with one non-physical emitter at a ceiling reflection point 440.

Another advantageous algorithm uses many reflections, at least those which are still characteristic enough, i.e. not the many small reflections in the reverberation tail. The principle exploited in this algorithm is that at least at each location of interest, e.g. for example on a shelf of the cupboard 208, on a coffee table 204 or on a couch 202, the ultrasound signal 300 detected by the receiver 226 during a time interval will have a characteristic signature of peaks. Hence the detected signature can be matched with a number of templates, having the typical signature of an ultrasound signal as it would be detected at a number of positions. Different algorithm combinations can be made with respect to the following variations.

A first variation is whether templates are prerecorded or calculated, i.e. simulated by means of a simulation means 227, e.g. software running on or a hardware circuit in the processor 222. In case they are prerecorded a user puts the object 224 of which the position is to be estimated, e.g. a remote control or a mobile phone, in different positions, e.g. five positions on the coffee table 204, some positions on different shelves of the cupboard 208, etc., and records the ultrasound signal, e.g. under different angles if the object is also rotated or multiple receivers resp. emitters are attached to the object. The user also marks a characteristic of the location, e.g. the name of the object the object 224 is on. All these measured templates are stored in a storage means. The evaluation means may match templates to obtain a position estimation in different ways. In a straightforward way, each template, corresponding to a particular object position, orientation, and possibly further parameters, such as whether a door 212 is open or closed, is matched with the ultrasound signal 300 detected during position estimation. This may be according to a variety of predetermined match functions, such as e.g. a coherence between a power density spectrum of the template and the ultrasound signal 300, a root mean square error, a cross correlation, a function of the peak positions, etc. Preferably a number of those criteria are combined in a single match function. A first ultrasound signal template 320 will match better with the detected ultrasound signal 300 than a second ultrasound signal template 330, since its peaks, first template peak 322 etc., are more similar to those of the detected ultrasound signal 300. In the schematic example this will be even more so if the match is restricted to a time interval 318, corresponding to a first template time interval 328 and a second template time interval 338.

A number of templates near to a particular position, e.g. all templates of positions on the coffee table 204, may be used in combination in the match criterion. E.g. a multidimensional space may be constructed on the basis of characteristics of the templates, e.g. time delay of the first, second, third, etc. peaks on a first, second, third, etc. axis, and then techniques from pattern recognition can be applied for characterizing the ultrasound signal 300. E.g. an N nearest neighbor classification may be used. Alternatively, the templates may also be calculated on the basis of the pulse and characteristics of the receiver and emitter and the room. E.g. a ray tracing algorithm may be used to simulate all the reflections and hence the signature at each position. The image method, which constructs pseudo sources for the reflections may also be used (see e.g. "J.B. Allen and D.A. Berkley: Image method for efficiently simulating small-room acoustics. Journal of the Acoustical Society of America, vol. 65, no 4, April 1979, pp. 943-950."). The characteristics of the room may be acquired by the same system, e.g. in case emitter arrays are present, the room may be scanned, or via other means, e.g. the contents of room being a factory floor, or fume cupboard in which experiments are performed may be measured and entered in a different manner.

A second variation is whether or not the LOS transmission is present. If it is not present all positions in the room are possible candidates -or at least those within a radius corresponding to the first measured peak, since this could either be a LOS transmission or a reflection, in which case the object 224 is closer to the emitter 220 than the sphere radius, however if the LOS transmission is present only positions on a sphere with a radius corresponding to the time delay of the LOS peak are possible candidates. This decreases the probability of erroneous position estimation.

Instead of matching with predetermined or precalculated templates in the storage means 225, positions may be predicted on the fly and corresponding ultrasound templates may be calculated by an optimization means 229, e.g. software running on or dedicated hardware in the processor 222. E.g., an initial position may be known, especially if a moving object is tracked, and a new position may be predicted. By comparing the match with position deviations in different directions a better estimate may be obtained. If the match function is represented as an N dimensional manifold, different optimization strategies may be employed, such as steepest descent, but also other techniques may be employed such as e.g. a genetic algorithm. The peaks may also be modeled by parametric functions for regions of the room 200, e.g. Gaussians. The location of the mode and the height of the Gaussian is a function of the position and orientation of the object 224, and may be calculated for a number of positions and orientations given the reflections in the vicinity and characteristics of the receiver 226. E.g. if a first orientation a1 has a signature with a first peak of height h1 1 and a second peak of height h21, and a second orientation a2 has a signature with a first peak of height h12 and a second peak of height h22, an intermediate actual orientation a of the object may be estimated by calculating the differences of the actually measured peak heights and those of the stored or calculated signature corresponding to the first and second orientation. The signatures may be calculated roughly in a variant where speed is preferred over accuracy, e.g. in case only a few far apart positions need to be identified, and a hierarchical approach may be used where e.g. the region of the room is first determined by identifying characteristic reflection peaks, and a more accurate position is then determined on the basis of templates for that region.

The description of Fig. 2 is now continued. The system functions similarly with either the emitter 220 attached to the object 224 and the receiver 226 fixed in the room, or the receiver 226 attached to the object 224. In the former case the emitter may be a simple circuit, comprising electronic components arranged to generate a pulse, connected to an ultrasound transducer, e.g. a piezo-electric component, the circuit being fed by a battery or a solar cell. This circuit may be part of an IC, e.g. a bluetooth IC. The circuit may e.g. be incorporated in a badge for tracking the behavior of an employee. If the emitter is fixed, it may be incorporated in a consumer electronic appliance such as a radio or a television, which currently may already have an ultrasound emitter, e.g. for localizing a listener. Also a receiver may be fixed in the TV. or other appliance.

The processor 222 may be comprised in a home PC, e.g. it may be realized by means of software supplied by a vendor of the system running on a general purpose processor, but alternatively it may be a dedicated device. It may even be comprised in the object 224.

A sophisticated variant of the object 224 such as a mobile phone may comprise collecting means 255 for collecting templates by detecting the ultrasound signal 300 at various object positions. The collecting means may comprise a user interface, such as a button, which can be pressed for activating the receiver, or a microphone for detecting the presence of and storing a spoken text. If the object 224 is simple, the collecting means 255 may be fixed in the room, e.g. attached to the processor 222. The simple object 224 may e.g. emit a pulse every few seconds or minutes at specific times, depending on among others a required temporal accuracy of position estimation and battery life, and the fixed collecting means 255 may be activated by voice command. A communication module 260 may also be attached to the object 224, e.g. a bluetooth link, which enables transmission of the detected ultrasound signal or time synchronization, compared to the speed of sound an electromagnetic signal travels instantaneously.

Different in house applications may benefit from the system, e.g. in a "find it" application, a remote control may be hidden behind a cushion on the couch. Upon estimating its position, the system may speak the word "couch" or show an icon of the remote control on an image of the room displayed on a display screen 210.

The object may determine its orientation a in the room, and depending on to which apparatus it is pointing (e.g. the object's IR remote control, or a camera, or a microphone is pointing), it may act different. E.g. if it is a mobile phone, it may transmit to another mobile phone an image displayed on a television 206 or the display screen 210.

As illustrated in Fig. 4, the location of objects on a table may be estimated. These may be souvenirs. If the vase 422 is positioned on the central part 430, a slide presentation or home video movie of a holiday in Greece may start.

If only a single isotropic emitter 220 is fixed in the room, care should be taken about its positioning. E.g. if it is placed in a corner of an empty room, confusions of positions mirrored with respect to the room diagonal may occur. A similar reasoning applies to a fixed receiver 226.

A second receiver 228, or emitter, may be attached to the object. Hence ultrasound signals detected from different directions may be used to more reliably estimate the position and/or orientation of the object 224. Each object or in general each emitter may emit a different signal, e.g. frequencies in one or more narrow spectral bands, so that each emitter is easily recognized. Alternatively they may emit signals at different reserved time intervals.

Tracking means 270 may be present, arranged to track along a trajectory the position of the object, e.g. as software running on the processor 222. E.g. Kalman filtering may be used to predict positions along the trajectory. The tracking means may supply candidate templates for matching or even select a different matching function depending on which part of the room 200 the object 224 is in.

Fig. 3a schematically shows a detected ultrasound signal 300. It is actually an electric signal representing an amplitude envelope of the ultrasound signal. This envelope arrives at the receiver 226 modulated on an ultrasound carrier. Typically filtering occurs to remove noise outside a frequency band of interest, demodulation, and analog digital conversion. There may also be matched filtering, taking into account characteristics of the emitter 220 and receiver 226. The peaks in this text are amplitude peaks and should not be confused with peaks in e.g. a correlation.

Figs. 3b and 3c schematically shows two example templates. It can be seen that a first ultrasound signal template 320 is very similar to the ultrasound signal 300 measured at a certain object 224 position, so the object 224 is probably at or very near to this positions, the differences between the two originating from e.g. measurement errors such as slightly different conditions in the room. The second template 330 is probably corresponding to an entirely different object 224 position. Note that t1 is the amount of time a LOS transmission takes to travel from the emitter to the receiver. A time reference from a clock is not always required in embodiments of the system according to the invention working with template matching, since regardless of the interval where there is little ultrasound energy detected before the LOS peak, the peaks will substantially match. Even when the first LOS peak is not present, the other peaks would still match relatively well.

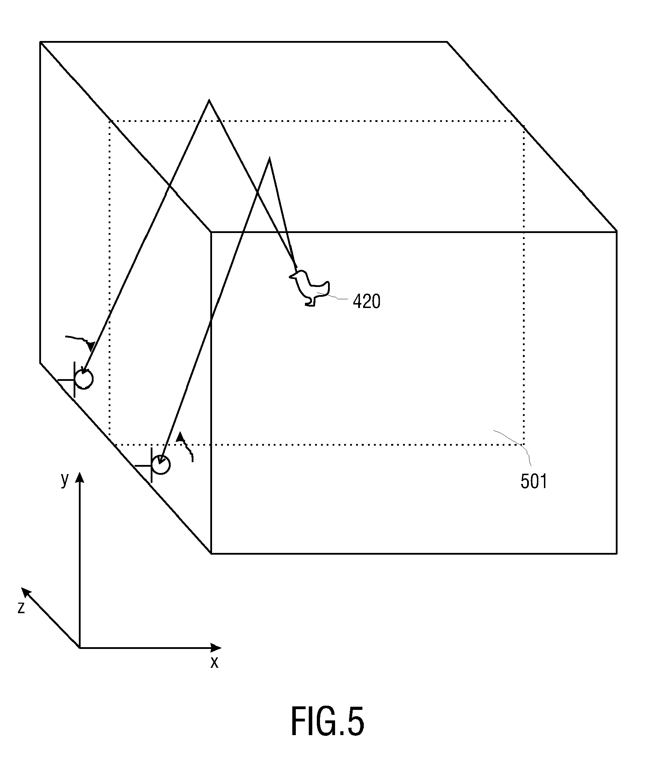

Fig. 5 shows the use of two emitters, in a two dimensional variant of the variant described with Fig. 4. Now also the position of a depth plane 501 in which the duck 420 resides can be determined, i.e. there are so many receivers as required to find all unknown position coordinates. Formulae for the arrival times of different peaks of ultrasound signals based on different pulses can be written down.

Under computer program product should be understood any physical realization of a collection of commands enabling a processor -generic or special purpose, after a series of loading steps to get the commands into the processor, to execute any of the characteristic functions disclosed in the present invention. In particular the computer program product may be realized as data on a carrier such as e.g. a disk or tape, data present in a memory, data traveling over a network connection, wired or wireless, or program code on paper. Apart from program code, characteristic data required for the program may also be embodied as a computer program product.

It should be noted that the above-mentioned embodiments illustrate rather than limit the invention and that those skilled in the art are able to design alternatives, without departing from the scope of the claims. Apart from combinations of elements of the invention as combined in the claims, other combinations of the elements within the scope of the invention as perceived by one skilled in the art are covered by the invention. Any combination of elements can be realized in a single dedicated element.

In particular, it should be clear to the skilled person that any combination of receivers and emitters fixed in the room and attached to the object can be employed. The system could even be used with two (moving or moveable) objects without fixed emitters or receivers to identify the relative position of the objects, provided that the room configuration and configuration of receivers and emitters is such that at least the positions of interest can be discriminated. E.g. a first transporting vehicle carrying supply goods in a factory may be following or avoiding another transporting vehicle, in which case a relative position of the two vehicles is to be determined. The storage means then contains templates of the ultrasound signals that can be detected in any relevant position, e.g. on a linear track the vehicle moves along, of the first vehicle, given the emitter attached to the second vehicle being in any relevant position. Knowledge on previous positions of the vehicles or other knowledge, e.g. a coarser position estimating system by means of beacons, photo cells or wires in the ground, can reduce the risk of getting erroneous position estimations. Any configuration can be used for position and/or angle estimation. In any of these systems, the characteristic ultrasound signal templates for each required position, orientation and further relevant parameters may be obtained by means of any measurement or calculation. In any of the previous systems, the estimations may be achieved by means of calculating properties of the detected ultrasound signal or by matching with any predetermined or on the fly determined combination of templates with any match or error function. And for any of the above-described systems any feasible ultrasound signal may be emitted and additional processing may be done at the receiver side to obtain a better quality signal.

Any reference sign between parentheses in the claim is not intended for limiting the claim. The word "comprising" does not exclude the presence of elements or aspects not listed in a claim. The word "a" or "an" preceding an element does not exclude the presence of a plurality of such elements.

The invention can be implemented by means of hardware or by means of software running on a computer, and previously stored on a data carrier or transmitted over a signal transmission system.

**Claims**

1. A position estimation system (220, 226, 222) for estimating a position of an object (224) in a room (200), comprising:

- an ultrasound emitter (220) arranged to emit an ultrasound pulse (201);
- an ultrasound receiver (226) arranged to detect an ultrasound signal (300) based on the pulse (201); and
- a processor (222) for processing the ultrasound signal (300) to obtain the position, **characterized in that**
- the ultrasound emitter (220) or ultrasound receiver (226) is attached to the object (224); and
- the processor comprises evaluation means (223) arranged to estimate the position of the object (224) on the basis of the ultrasound signal (300) in a first time interval (318), the first time interval (318) comprising ultrasound energy of at least a first reflection (230) of the pulse (201) on a reflecting object (232)

wherein the position estimation system comprises a storage means (225), arranged to store a first ultrasound signal template (320) corresponding to a first position of the object (224) and a second ultrasound signal template (330) corresponding to a second position of the object (224), and the evaluation means (223) is arranged to compute a first match by evaluating a predetermined match function with as arguments the ultrasound signal (300) in the first time interval (318) and the first template (320) in a first template interval (328), and a second match by evaluating the predetermined match function with as arguments the ultrasound signal (300) in the first time interval (318) and the second template (330) in a second template interval (338), the position estimation system (220, 226, 222) further comprising collecting means (255), arranged to collect a number of templates including at least the first template (320) and the second template (330) on the basis of ultrasound signal measurements by the receiver (226), with the object positioned at positions in the room (200) corresponding to the first resp. the second position and the position estimation system further comprises marking means for marking a collected template with a position characteristic for the position at which the template was collected.

2. A position estimation system (220,226, 222) as claimed in claim 1, wherein the marking means comprise a microphone and coupling means to couple a speech signal recorded via the microphone to a collected template.

3. A position estimation system as claimed in claim 2, wherein the object comprises the microphone.

4. A position estimation system (220, 226, 222) as claimed in claim 1, comprising optimization means (229), arranged to predict a predicted position of the object (224) and to evaluate a third ultrasound signal template on the basis of the pulse (201), predetermined characteristics of the room (200) and the predicted position.

5. A position estimation system (220, 226, 222) as claimed in claim 1, in which a second object emitter (630) is attached to the object (224), and the processor (222) is arranged to estimate the position of the object (224) based on the ultrasound signal (300) detected by the receiver (226) and on a second ultrasound signal detected by the second receiver (228), respectively based on the ultrasound signal (300) detected on the basis of the pulse (201) emitted by the emitter (220) and on the second ultrasound signal detected on the basis of a second pulse emitted by the second object emitter (630).

6. A position estimation system (220, 226, 222) as claimed in claim 1, in which a second object emitter (630) is attached to the object (224), and in which the processor (222) is arranged to estimate the orientation (a) of the object (224) based on the ultrasound signal (300) detectable by the receiver (226) and a second ultrasound signal detectable by the second receiver (228), respectively based on the ultrasound signal (300) detectable on the basis of the pulse (201) emitted by the emitter (220) and the second ultrasound signal detectable on the basis of a second pulse emitted by the second object emitter (630).

7. A position estimation system (220, 226, 222) as claimed in claim 1, in which a plurality of emitters is attached to the object (224), arranged in at least one array, to create a number of pulses of different shapes and orientations respectively to receive pulses impinging on the array of receivers from different orientations and in different solid angles.

8. A position estimation system (220, 226, 222) as claimed in claim 1, in which the emitter (220) is arranged to emit the pulse (201) comprising frequencies in at least one predetermined frequency band characteristic for the object (224).

9. A position estimation system (220, 226, 222) as claimed in claim 1, in which the object (224) is capable of moving or being moved, and tracking means (270) are comprised, arranged to track along a trajectory the position of the object (224).

10. A method of estimating a position of an object (224) in a room (200), comprising:

- emitting an ultrasound pulse (201);
- detecting an ultrasound signal (300) based on the pulse (201); and
- processing the ultrasound signal (300) to obtain the position, **characterized in that**
- the pulse is emitted from a position adjacent to the object (224); and
- the processing comprises an evaluation of the ultrasound signal (300) in a first time interval (318) comprising ultrasound energy of at least a first reflection (230) of the pulse (201) on a reflecting object (232)

wherein the position estimation system comprises a storage means (225), arranged to store a first ultrasound signal template (320) corresponding to a first position of the object (224) and a second ultrasound signal template (330) corresponding to a second position of the object (224), and the evaluation means (223) is arranged to compute a first match by evaluating a predetermined match function with as arguments the ultrasound signal (300) in the first time interval (318) and the first template (320) in a first template interval (328), and a second match by evaluating the predetermined match function with as arguments the ultrasound signal (300) in the first time interval (318) and the second template (330) in a second template interval (338), the position estimation system (220, 226, 222) further comprising collecting means (255), arranged to collect a number of templates including at least the first template (320) and the second template (330) on the basis of ultrasound signal measurements by the receiver (226), with the object positioned at positions in the room (200) corresponding to the first resp. the second position and the position estimation system comprises marking means for marking a collected template with a position characteristic for the position at which the template was collected, the method comprising positioning the object at a position, collecting a template and providing the marking means with a position characteristic for the collected template.

11. A method as claimed in claim 10, wherein the object is provided with a microphone and a speech signal is collected via the microphone and coupled, as a position characteristic, to the collected template.

12. A computer program product enabling the processor (222) to execute the method as claimed in claim 10 or 11.

FIG.1a

FIG.1b

FIG.2

200

206

250

208

210

204

224

255

228

260

226

230

231

232

201

229

223

225

227

270

222

202

220

212

a

FIG.3a

FIG.3b

FIG.3c

FIG.4

EP 1 760 490 A1

FIG.5

EP 1 760 490 A1

FIG.6

European Patent
Office

**EUROPEAN SEARCH REPORT**

Application Number

EP 06 12 3345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/052821 A1 (HOLT BRIAN) 20 March 2003 (2003-03-20) * paragraphs [0032] - [0056]; figure 3 * ----- | 1-4,8-12 | INV. G01S11/14 G01S5/18 |
| Y | WO 02/096148 A (GREGO GIORGIO ; TELECOM ITALIA LAB S P A (IT)) 28 November 2002 (2002-11-28) * page 13, column 20 - page 14, column 16; figures 1-3 * ----- | 1-4,8-12 | |
| Y | US 2003/072456 A1 (GRAUMANN DAVID [US]) 17 April 2003 (2003-04-17) * paragraphs [0019] - [0037]; figures 2,4,5 * ----- | 1-4,8-12 | |
| A | US 5 321 668 A (ROUQUETTE ROBERT E) 14 June 1994 (1994-06-14) * column 18, line 56 - column 19, line 9; figure 13 * ----- | 1,10 | |
| X,P | DIJK E ET AL: "Estimation of 3D Device Position by Analyzing Ultrasonic Reflection Signals" PRORISC/IEEE ANNUAL WORKSHOP ON CIRCUITS AND SYSTEMS AND SIGNAL PROCESSING, XX, XX, 26 November 2003 (2003-11-26), pages 88-94, XP002351808 * the whole document * ----- | 1-12 | TECHNICAL FIELDS SEARCHED (IPC)  G01S |

The present search report has been drawn up for all claims

| Place of search | Date of completion of the search | Examiner |
|---|---|---|
| Munich | 12 January 2007 | FANJUL CAUDEVILLA, J |

EPO FORM 1503 03.82 (P04C01)

## ANNEX TO THE EUROPEAN SEARCH REPORT
## ON EUROPEAN PATENT APPLICATION NO.

EP 06 12 3345

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2007

| Patent document cited in search report | | Publication date | Patent family member(s) | | Publication date |
|---|---|---|---|---|---|
| US 2003052821 | A1 | 20-03-2003 | CA | 2450810 A1 | 03-01-2003 |
| | | | CN | 1529821 A | 15-09-2004 |
| | | | EP | 1407288 A2 | 14-04-2004 |
| | | | JP | 2004531737 T | 14-10-2004 |
| | | | WO | 03001686 A2 | 03-01-2003 |
| | | | US | 2002196186 A1 | 26-12-2002 |
| WO 02096148 | A | 28-11-2002 | IT | T020010486 A1 | 25-11-2002 |
| US 2003072456 | A1 | 17-04-2003 | NONE | | |
| US 5321668 | A | 14-06-1994 | US | 5214617 A | 25-05-1993 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5107746 A

### Non-patent literature cited in the description

- **S. HAYKIN.** Adaptive filter theory. Prentice Hall, 2001

- **J.B. ALLEN ; D.A. BERKLEY.** Image method for efficiently simulating small-room acoustics. *Journal of the Acoustical Society of America,* April 1979, vol. 65 (4), 943-950